**Europäisches Patentamt**

**European Patent Office**

**Office européen des brevets**

(19)

(11) Veröffentlichungsnummer: **0 358 743 B1**

(12)

# EUROPÄISCHE PATENTSCHRIFT

(45) Veröffentlichungstag der Patentschrift :
**22.07.92 Patentblatt 92/30**

(51) Int. Cl.$^5$: **B60T 8/40,** B60T 13/18,
F04B 49/00, F04B 1/04

(21) Anmeldenummer : **89902782.5**

(22) Anmeldetag : **02.03.89**

(86) Internationale Anmeldenummer :
**PCT/EP89/00209**

(87) Internationale Veröffentlichungsnummer :
**WO 89/08573 21.09.89 Gazette 89/23**

(54) **BREMSANLAGE.**

(30) Priorität : **08.03.88 DE 3807452
11.03.88 DE 3808126**

(43) Veröffentlichungstag der Anmeldung :
**21.03.90 Patentblatt 90/12**

(45) Bekanntmachung des Hinweises auf die
Patenterteilung :
**22.07.92 Patentblatt 92/30**

(84) Benannte Vertragsstaaten :
**DE FR GB**

(56) Entgegenhaltungen :
**EP-A- 0 109 480
EP-A- 0 255 681
DE-A- 2 122 757
DE-A- 2 425 022
DE-A- 2 626 371**

(56) Entgegenhaltungen :
**DE-A- 2 933 084
DE-A- 3 028 396
DE-A- 3 241 039
DE-A- 3 403 237
GB-A- 2 192 684**

(73) Patentinhaber : **ALFRED TEVES GMBH
Guerickestrasse 7
W-6000 Frankfurt/Main 90 (DE)**

(72) Erfinder : **REINARTZ, Hans-Dieter
In der Römerstadt 169
W-6000 Frankfurt/Main 50 (DE)**
Erfinder : **VOLZ, Peter
In den Wingerten 14
W-6100 Darmstadt (DE)**

(74) Vertreter : **Grau, Ulf
c/o ALFRED TEVES GMBH Guerickestrasse 7
W-6000 Frankfurt (M) 90 (DE)**

EP 0 358 743 B1

## Beschreibung

Die Erfindung betrifft eine Bremsanlage, insbesondere für Kraftfahrzeuge mit einem Hauptzylinder, Radzylindern und einer Vorrichtung zur Antiblockierregelung, wobei im Regelmodus zur Positionierung mindestens eines Kolbens des Hauptzylinders in einer gewünschten Position eine Pumpe vorgesehen ist, deren Fördervolumen variierbar ist, die durch eine hydraulische Leitung (Druckleitung) mit dem Hauptzylinder verbunden ist, und die durch ihr Fördervolumen den Kolben positioniert, die Teil eines Pumpenaggregats ist, das mindestens eine Einlaßleitung, die eine Verbindung mit dem Vorratsbehälter herstellt, umfaßt, mit einem elektronischen Regler für die Antiblockierregelung.

Antiblockiersysteme finden in immer größerer Stückzahl Anwendung in der Kraftfahrzeugindustrie, dabei werden bei bestimmten Kategorien dieser Antiblockiersysteme Hydraulikpumpen zur Erzeugung eines Hilfsdrucks im Regelmodus eingesetzt. Eine derartige Antiblockiervorrichtung ist beispielsweise durch die DE-A-37 31 603 bekannt geworden.

In dieser Patentanmeldung wird eine Bremsanlage, insbesondere für Kraftfahrzeuge, mit einem Hauptzylinder, Radzylindern und einer Vorrichtung zur Antiblockierregelung beschrieben. Bei dieser Bremsanlage wird im Regelmodus zur Positionierung des Kolbens des Hauptzylinders in einer gewünschten Position eine Druckmittelquelle, insbesondere eine Pumpe, vorgesehen, deren Fördervolumen variierbar ist, die durch eine hydraulische Leitung mit dem Hauptzylinder verbunden ist und die durch ihr Fördervolumen den Kolben positioniert.

Der Erfindung liegen folgende Aufgaben zugrunde:

Die Sicherheit und das Pedalgefühl sollen bei derartigen Bremsanlagen verbessert werden. Insbesondere soll die Ausfallsicherheit des Elektromotors und damit der vom Elektromotor angetriebenen Pumpe und des gesamten Systems erhöht werden. Des weiteren soll erreicht werden, daß das Bremspedal im ABS-Modus eine gewillkürte Position vor seiner Ausgangsstellung einnimmt.

Es soll erreicht werden, daß der Elektromotor während des Regelmodus durchläuft. Es soll kein mehrmaliges Hochlaufen stattfinden. Damit werden Stromspitzen vermieden. Die Relaisbeanspruchung wird reduziert. Die Sicherheit des gesamten Systems wird erhöht.

Es soll erreicht werden, daß die hohen Einschaltströme des Elektromotors für den Antrieb der Pumpe nur einmal bei jeder Regelung entstehen. Der Bauaufwand soll gering sein, um eine kostengünstige Herstellung zu erzielen und um die Sicherheit der gesamten Anlage zu erhöhen. Diese Erhöhung der Sicherheit soll auch dadurch erreicht werden, daß die Bauteile weniger beansprucht werden.

Weiterhin gehört es zur Aufgabenstellung, den Bauaufwand für die Bremsanlage zu reduzieren. Die Anzahl der hydraulischen Leitungen, Bohrungen und Ventile soll verringert werden.

Bei einer Bremsanlage, die zweikreisig aufgebaut ist, und einen Tendemhauptzylinder aufweist, soll folgendes erreicht werden:

Wenn nur der Druckstangenkolben sensiert wird, dann soll auch nur der Druckstangenkolben durch das Fördervolumen der Pumpe positioniert werden, während der Schwimmkolben bis zu seiner Grundstellung, der Zentralventilregelposition zurückgeschoben wird.

Die gestellten Aufgaben werden erfindungsgemäß dadurch gelöst, daß dem Pumpenaggregat Mittel zugeordnet sind, welche den Kolbenrückhub oder den Einlaß oder den Auslaß blockieren und damit die Förderung der Pumpe unterbrechen. Die Mittel werden durch ein oder mehrere Ausgangssignale des elektronischen Reglers aktiviert.

Diese Mittel können elektromagnetisch, hydraulisch, mechanisch oder pneumatisch, vorzugsweise durch die Differenz des atmosphärischen Drucks und des Unterdrucks am Ansaugstutzen des Verbrennungsmotors des Fahrzeugs, betätigt werden.

Bei Bremsanlagen mit einem, insbesondere als Rückschlagventil ausgebildeten, Saug- oder Einlaßventil in der Einlaßleitung des Pumpenaggregats kann vorgesehen werden, daß die Mittel aus einer Stößelvorrichtung bestehen, die den Schließkörper des Rückschlagventils vom Ventilsitz abhebt.

Alternativ zu diesem Ausführungsbeispiel wird weiterhin vorgeschlagen, daß eine Stößelvorrichtung vorgesehen ist, die den Schließkörper des, insbesondere als Rückschlagventil ausgebildeten, Saug- oder Einlaßventils in Offenposition verklemmt, so daß eine Passage des Druckmittels möglich ist.

Die Förderleistung der Pumpe kann in einem anderen Ausführungsbeispiel dadurch gedrosselt werden, daß in der Einlaßleitung eine Sperrvorrichtung, vorzugsweise bestehend aus einem Schließkörper und einem Ventilsitz, vorgesehen ist.

In einem weiteren Ausführungsbeispiel wird vorgesehen, daß in der Druckleitung eine Sperrvorrichtung, vorzugsweise einen verschiebbaren Sperrkörper umfassend, vorgesehen ist, der die Druckleitung zum Hauptzylinder sperrt, daß strömungsmäßig oberhalb der Sperrvorrichtung die Druckleitung über eine hydraulische Rückführleitung mit der Einlaßleitung verbunden ist, daß in der Rückführleitung ein Überdruckventil angeord-

2

net ist.

Wenn die Bremsanlage mit einer Pumpe ausgerüstet ist, die einen Hubkolben aufweist, kann zur Verkörperung der Erfindung vorgesehen werden, daß eine Hubbegrenzungsvorrichtung vorgesehen ist, die aus einem Schieberelement besteht, das die Bewegungen des Hubkolbens blockiert.

Dabei kann vorgesehen sein, daß der Hubkolben bei Betätigung des Schieberelements am Schieberelement anschlägt. Insbesondere kann vorgesehen sein, daß der Hubkolben mit einem Absatz versehen ist, der auf das Ende des, Schieberelements aufsitzt.

Die Mittel zur Reduzierung der Pumpenförderleistung, insbesondere die Sperrvorrichtungen, können in einem oder in beiden Pumpenkreisen, beziehungsweise in einer oder beiden Pumpen, eingesetzt werden.

Im Antriebsschlupfregelmodus kann ein Kreis abgeschaltet werden.

Die gestellten Aufgaben werden auch dadurch gelöst, daß eine Vorrichtung zur Sperrung der Saugseite der Pumpe vorgesehen ist, daß die Vorrichtung so ausgebildet ist, daß sie die Sperrung der Saugseite dann aufhebt, wenn der Arbeitskolben des Hauptzylinders eine bestimmte Strecke in den Hauptzylinder hinein zurückgelegt hat.

In weiterer Aüsgestaltung der Erfindung kann vorgesehen werden, daß die Vorrichtung zur Sperrung der Saugseite der Pumpe aus einem Ventil besteht, das über eine Rampen-Stößel-Anordnung betätigbar ist.

Zur Konkretisierung dieses Gedankens wird vorgeschlagen, daß die Vorrichtung zur Sperrung der Saugseite der Pumpe ein Kolbenelement, das mit Rampen versehen ist, ein Stößelelement, einen Ventilsitz, einen unter dem Druck einer Feder stehenden Schließkörper umfaßt, daß bei Bewegung des Kolbenelements die Rampen des Kolbenelements den Stößel bewegen und daß der Stößel den Schließkörper vom Ventilsitz abhebt.

Die Vorrichtung zur Sperrung der Saugseite der Pumpe kann als integraler Teil des Hauptzylinders ausgebildet sein. Alternative dazu kann die Vorrichtung zur Sperrung der Saugseite der Pumpe in einem Gehäuse untergebracht sein, das am Hauptzylinder angebracht ist, und zwar vorzugsweise angegossen ist.

In weiterer Ausgestaltung der Erfindung wird vorgeschlagen, daß die Vorrichtung zur Sperrung der Saugseite der Pumpe mindestens einen mit Schaltrampen versehenen Arbeitskolben (Druckstangenkolben und/oder Schwimmkolben) des Hauptzylinders, ein Stößelelement, einen Ventilsitz, einen Schließkörper umfaßt, daß bei Bewegung des Arbeitskolbens die Rampen des Arbeitskolbens das Stößelement bewegen und daß das Stößelelement den Schließkörper vom Ventilsitz abhebt.

Weitere Einzelheiten der Erfindung sind der folgenden Beschreibung mehrerer Ausführungsbeispiele der Erfindung zu entnehmen.

Dieses Ausführungsbeispiel wird anhand von acht Figuren erläutert.

Figur 1 zeigt eine Antiblockiervorrichtung mit einem Unterdruckbremskraftverstärker.

Die Figuren 2 bis 5 zeigen in Schnittdarstellung den Teil eines Pumpenaggregats mit mehreren Ausführungsbeispielen.

Figur 6 zeigt ein Ausführungsbeispiel der Erfindung, basierend auf einer Antiblockiervorrichtung, wie sie in Figur 1 dargestellt ist.

Figur 7 zeigt eine Variante des Ausführungsbeispiels nach Figur 6.

Figur 8 zeigt ein weiteres Ausführungsbeispiel.

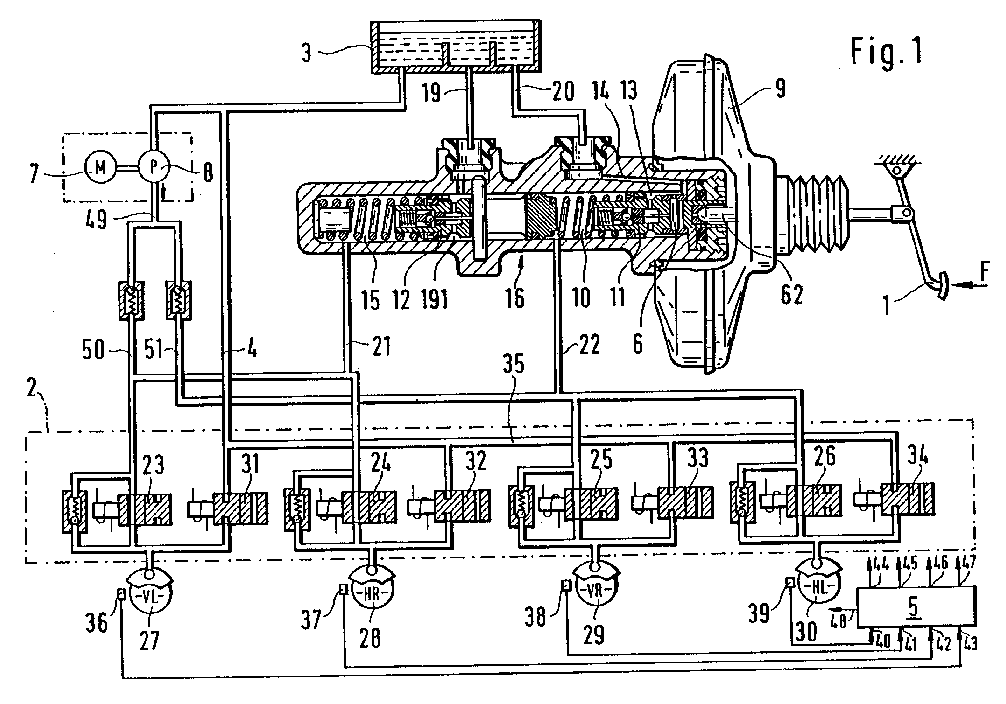

Die Vorrichtung nach Figur 1 ist als Stand der Technik anzusehen, sie umfasst folgende Aggregate: einen vom Bremspedal 1 betätigten Vakuumbremskraftverstärker 9, einen Tandemhauptzylinder 16, einen Modulator 2 für die Druckregelung im Antiblockiermodus, einen elektronischen Regler 5 zur Verarbeitung von Sensorsignalen und eine Hydraulikdruckpumpe 8, die von einem Elektromotor 7 angetrieben wird.

In Figur 1 ist die Anlage in Lösestellung gezeigt. Die Druckkammern 10, 15 des Hauptzylinders sind in bekannter Weise über offene Zentralregelventile, über Anschlußkanäle im Innern der Kolben sowie über eine Ringkammer im Zwischenkolben, über Bohrungen und über hydraulische Leitungen 19, 20 mit dem Druckmittelvorratsbehälter 3 verbunden.

Die beiden Druckkreise 21, 22 des Hauptzylinders sind über elektromagnetisch betätigbare, in der Grundstellung auf Durchlaß geschaltete Ventile, sogenannte "Stromlos-Offen-Ventile" (SO-Ventile) oder Einlaßventile 23, 24, 25, 26 mit den Radbremsen 27, 28, 29, 30 verbunden.

Die parallel geschalteten Radbremsen 27, 28 beziehungsweise 29, 30, sind den diagonal angeordneten Druckkreisen (Bremskreisen) 21, 22 zugeordnet. Für die Anordnung der zu den genannten Bremsen korrespondierenden Fahrzeugrädern wurden folgende Kurzbezeichnungen benutzt: VL für vorn links, HR für hinten rechts, VR für vorn rechts; HL für hinten links. Die Radbremsen 27, 28, 29, 30 sind außerdem über elektromagnetisch betätigbare, in der Grundstellung sperrende Ausgangsventile 31, 32, 33, 34, sogenannte "Stromlos-Geschlossen-Ventile" (SG-Ventile), über eine hydraulische Rückflußleitung 35, und über die Leitung 4 an den Vorratsbehälter oder Druckausgleichsbehälter 3 anschließbar. Die Fahrzeugräder sind mit Sensoren 36, 37, 38, 39 ausgerüstet, die mit synchron zur Radumdrehung mitlaufenden Zahnscheiben zusammenwirken und elektrische Signale erzeugen, die das Raddrehverhalten, das heißt die Radumfangsgeschwindigkeit und Änderungen dieser Geschwindigkeit, erkennen lassen. Diese Signale werden über die Eingänge 40, 41, 42, 43 dem elektronischen Regler 5 zugeführt. Der elektronische Regler verarbeitet die Sensorsignale aufgrund eines in ihm gespeicherten Regelalgorithmus zu Ausgangssignalen (Bremsdrucksteuersignale), mit denen im Bremsdruckregelmodus, die SO-Ventile und SG-Ventile geschaltet werden, wodurch in den einzelnen Radzylindern der Scheibenbremsen entsprechend dem Regelalgorithmus die Bremsdrücke abgebaut, konstant gehalten oder wieder erhöht werden. Über die Ausgänge 44, 45, 46, 47 des elektronischen Reglers werden hierzu die Betätigungsmagnete der SO-Ventile und SG-Ventile angesteuert. Die elektrischen Verbindungsleitungen zwischen den Ausgängen 44, 45, 46, 47 und den Wicklungen der SO- und SG-Ventile sind in den Figuren nicht dargestellt. Im Bremsdruckregelmodus wird der Elektromotor 7 der Pumpe 8 in Betrieb gesetzt. Das Einschaltsignal erhält der Motor vom Ausgang 48 des elektronischen Reglers 5. Die Pumpe baut im Regelmodus Druck in den Druckleitungen 49, 50, 51 auf. Diese Leitungen stellen eine Druckmittelführung dar, die mit der Druckmittelführung des Tandemhauptzylinders, in Form der Druckleitungen 21, 22, verbunden ist. Im Regelmodus werden also die Druckräume 10, 15 des Tandemhauptzylinders durch die Pumpe unter Druck gesetzt.

Bei Bremsbetätigung im Normalbremsmodus wird die Pedalkraft F, unterstützt durch den Unterdruck im Verstärker 9 auf die Hauptzylinderkolben übertragen. Die zentralen Regelventile in diesen Kolben schließen, so daß sich nunmehr in den Druckkammern 10, 15 und damit in den Bremskreisen 21, 22 Bremsdruck aufbauen kann, der über die SO-Ventile 23, 24, 25, 26 zu den Radbremszylindern gelangt. Wird nun mit Hilfe der Sensoren 36, 37, 38, 39 und des elektronischen Reglers 5 eine Blockiertendenz an einem oder mehreren Rädern erkannt, setzt der Antiblockierregelmodus ein. Der Antriebsmotor 7 der Pumpe 8 schaltet sich ein, wodurch in den Druckleitungen 49, 50, 51 Druck aufgebaut wird, der einerseits über die SO-Ventile auf die Radzylinder der Radbremsen einwirkt und andererseits die Druckkammern des Hauptzylinders mit Druck, wie dargestellt, beaufschlagt. Entsprechend dem Regelalgorithmus führen weitere Signale des elektronischen Reglers zur Umschaltung der elektromagnetisch betätigbaren SO- und SG-Ventile.

Infolge des Pumpendrucks in den Arbeitskammern 10 und 15 werden die Arbeitskolben 11 und 12 in der Figur 1 nach rechts verschoben. Der Druckstangenkolben 11 fährt bei den Bremskraftverstärkern des Standes der Technik bis an seinen rechten Anschlag 6 (Figur 1). Dadurch wird das Bremspedal 1 zurückgestellt, es nimmt seine Grundposition ein. Der Fuß des Fahrers tritt also gegen ein zurückgestelltes Pedal. In dieser Position öffnen die Zentralventile des Druckstangenkolbens 11 und des Zwischenkolbens 12. Druckmittel kann über diese Zentralventile in an sich bekannter Weise über die Rückflußleitungen 19 und 20 in den Vorratsbehälter 3 zurückfließen.

Beim Zwischenkolben geschieht dies über den drucklosen Ringraum des Zwischenkolbens. Beim Druckstangenkolben geschieht dies über den drucklosen Nachlaufraum 13, die Nachlaufbohrung 14 in die Rückflußleitung 20. Während des gesamten Regelmodus werden die Arbeitskolben in der Grundposition gehalten. Ebenso wird das Bremspedal während des gesamten Regelmodus in seiner Ausgangsstellung gehalten.

Die DE-A 37 31 603 zeigt eine Sensierung des Druckstangenkolbens oder des Blechkolbens des Vakuumbremskraftverstärkers. Je nach Ist-Position des Arbeitskolbens fördert die Pumpe des Standes der Technik bestimmte Volumina in den Arbeitsraum des Hauptzylinders um den Arbeitskolben in seine Soll-Position zu bringen. Damit soll auch das wirkungsmäßig mit dem Arbeitskolben verbundene Bremspedal vor seiner normalen Grundstellung während des Regelmodus positioniert werden.

Von diesem Gedanken ausgehend wird in der vorliegenden Erfindung ein Pumpenaggregat vorgeschlagen, das Mittel umfaßt, die in Abhängigkeit von der Position des Arbeitskolbens des Hauptzylinders die Pumpenförderleistung reduzieren. Diese Mittel werden durch ein oder mehrere Ausgangssignale des elektronischen Reglers aktiviert.

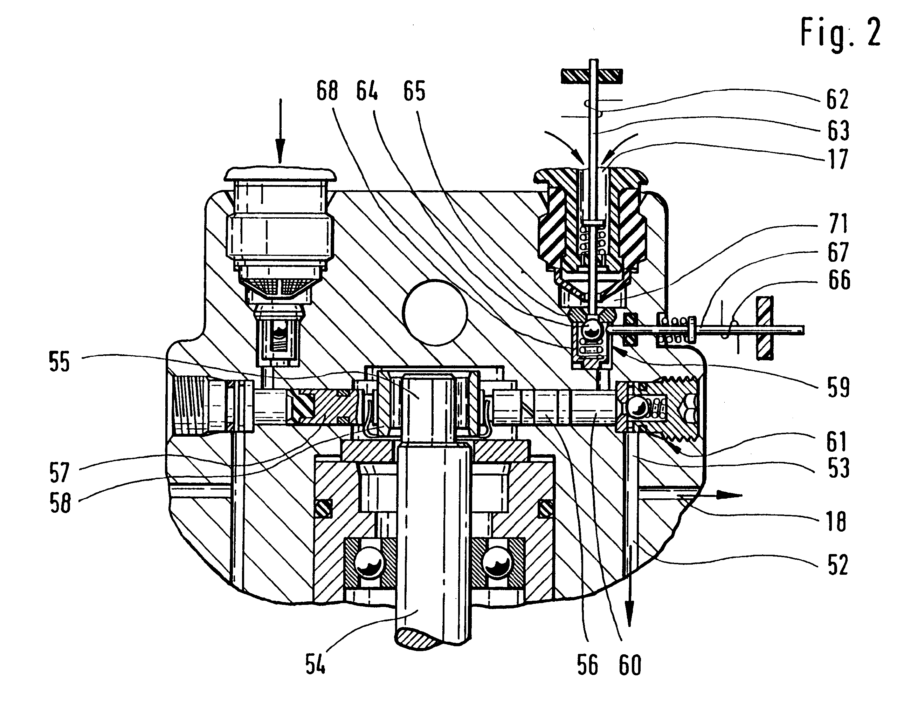

In den Figuren 2 bis 5 ist die Einlaßleitung des Pumpenaggregats mit 17 bezeichnet. Die Einlaßleitung verbindet den Vorratsbehälter mit der Saugseite der Pumpe. Mit 18 ist die hydraulische Leitung zum Hauptzylinder und mit 52 die hydraulische Leitung zum Radzylinder beziehungsweise zum Druckmodulator bezeichnet. 53 ist die Druckleitung, über die die hydraulische Leitung zum Hauptzylinder und die hydraulische Leitung zum Radzylinder versorgt werden.

In den Figuren 2 bis 5 ist eine Antriebswelle 54 und ein Exzenter 55 dargestellt. Der Exzenter bewegt die radial angeordneten Kolben 56, 57. Wie aus der Zeichnung erkennbar, handelt es sich um Hubkolben, die durch die äußere Hülse 58 eines Wälzlagers, das auf dem Exzenter sitzt, bewegt werden.

Zur Beschreibung der Ausführungsbeispiele wird die rechte Hälfte der Figuren 2 bis 5 benutzt.

Bei Pumpenbetrieb strömt Druckmittel über die Einlaßleitung 17 und das geöffnete Rückschlagventil 59 in den Arbeitsraum 60 der Pumpe. Von dort fließt, wenn die Pumpe fördert, Druckmittel über das Rückschlagventil 61, die Druckleitung 51 in die Leitung 18 zum Hauptzylinder und die Leitung 52 zu den Radzylindern.

Es folgt die Beschreibung der Arbeitsweise des Ausführungsbeispiels gemäß Figur 2.

Wie im Rahmen der Beschreibung der Figur 1 dargestellt, wird bei Beginn des Regelmodus die Pumpe in Betrieb gesetzt. Wenn im Regelmodus zur Positionierung des Arbeitskolbens des Hauptzylinders das Fördervolumen der Pumpe reduziert werden soll, wird die elektromagnetische Betätigungseinheit 62 durch ein Signal des elektronischen Reglers des Antiblockiersystems aktiviert. Der Stößel 61 hebt die Kugel 64 vom Ventilsitz 65 ab. Die Pumpe erbringt keine Förderleistung mehr. Volumen wird bei jedem Kolbenhub über das geöffnete Rückschlagventil in den drucklosen Ansaugkanal 71 zurückgefördert.

Mit 66 ist eine weitere elektromagnetische Betätigungseinheit bezeichnet, die alternativ zur elektromagnetischen Betätigungseinheit 62 eingesetzt werden kann. Bei Aktivierung der elektromagnetischen Betätigungseinheit 66 wird über den Stößel 67, die Kugel 64 an die linke Wand des Körpers 68 gedrückt, so daß auf der rechten Seite zwischen der Kugel 64 und dem Ventilsitz 65 ein offener Spalt gebildet wird. Dieser offene Spalt ermöglicht, das oben beschriebene Zurückströmen des Druckmittels in den drucklosen Ansaugkanal 71.

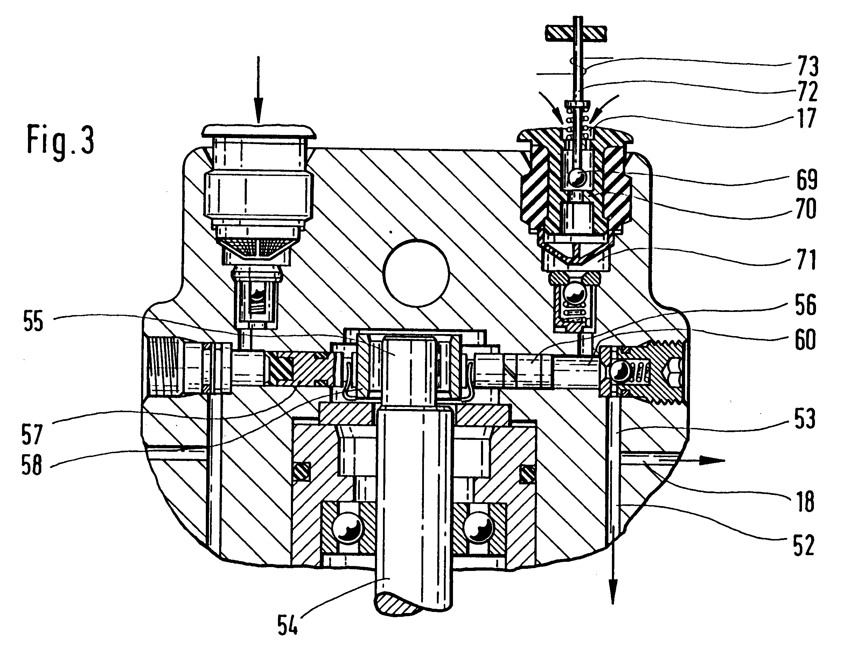

Beim Ausführungsbeispiel gemäß Figur 3 sind ein Schließkörper 69 und ein Ventilsitz 70 vorgesehen. Die Drosselung der Pumpenleistung wird dadurch erreicht, daß der Ansaugkanal 71 abgesperrt wird. Die Absperrung wird dadurch erreicht, daß sich der Schließkörper 69 auf den Ventilsitz 70 setzt. Der Schließkörper wird über die Stange 72 durch die elektromagnetische Betätigungseinheit 73 bewegt.

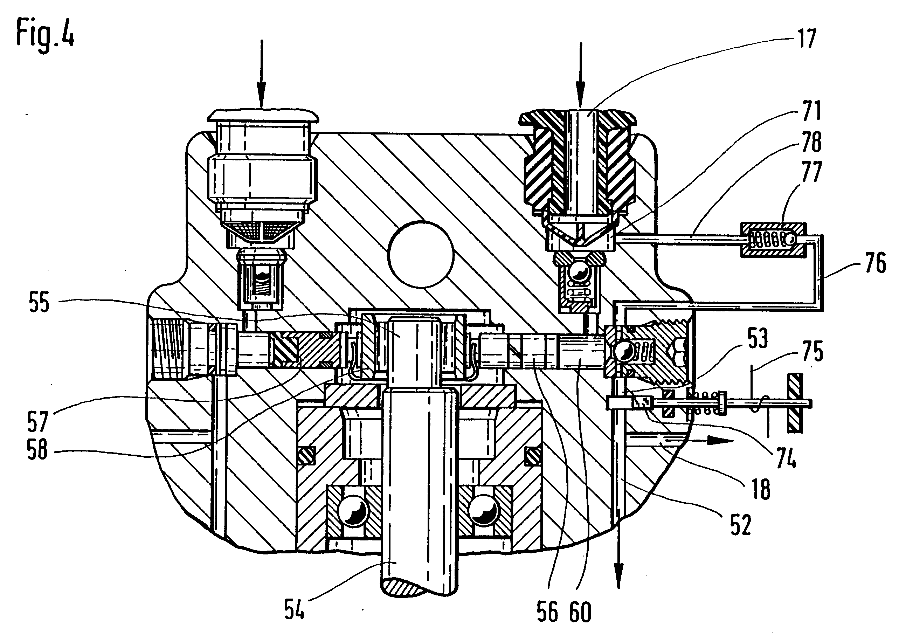

Nach dem Ausführungsbeispiel gemäß Figur 4 wird die Förderleistung der Pumpe dadurch reduziert, daß ein Sperrkörper 74 die Druckleitung 53 absperrt. Bei der Aktivierung der elektromagnetischen Betätigungseinheit 75 wird der Sperrkörper nach links bewegt. Er verschließt die Druckleitung 53, Druckmittel fließt dann über die Leitung 76, das Überdruckventil 77, die Leitung 78 zur Ansaugseite der Pumpe. Die Förderung von Druckmittel in den Hauptzylinder ist damit unterbrochen.

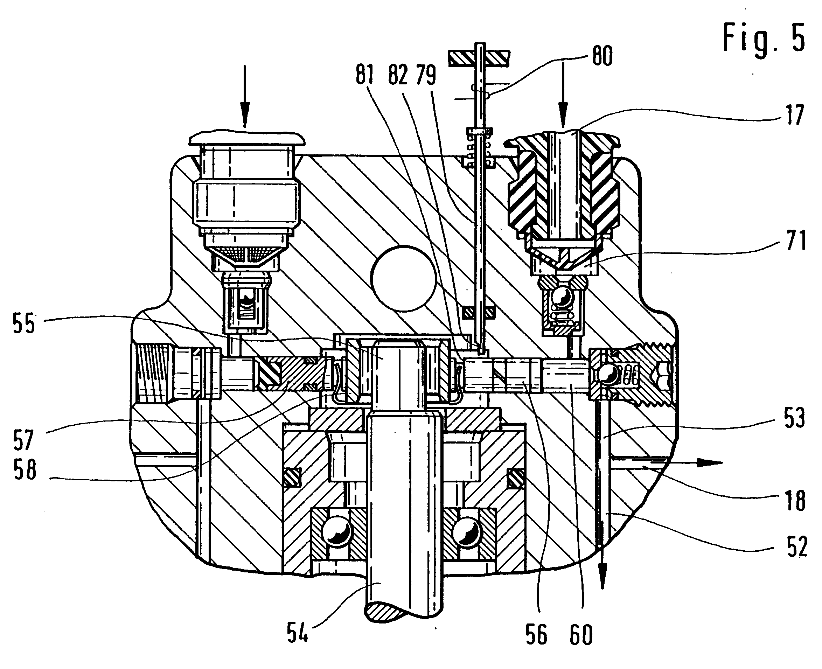

Im Ausführungsbeispiel gemäß Figur 5 ist ein Schieberelement 79 vorgesehen, das durch eine elektromagnetische Betätigungseinheit 80 nach unten bewegt werden kann. Der Hubkolben 56 weist einen Absatz 81 auf, der in vorgeschobener Stellung des Schieberelements auf dem unteren Ende 82 des Schieberelements aufsitzt, wenn der Hubkolben von seiner radial außen liegenden Position in die Richtung nach radial innen bewegt wird. Der Absatz 81 wird im oberen Totpunkt des Hubkolbens 56 durch das Schieberelement 79 gehalten. Damit kann der Kolben 56 nicht mehr der Hubkurve des Exzenters beziehungsweise der Hülse 58 folgen. Die Förderung des Druckmittels wird unterbrochen.

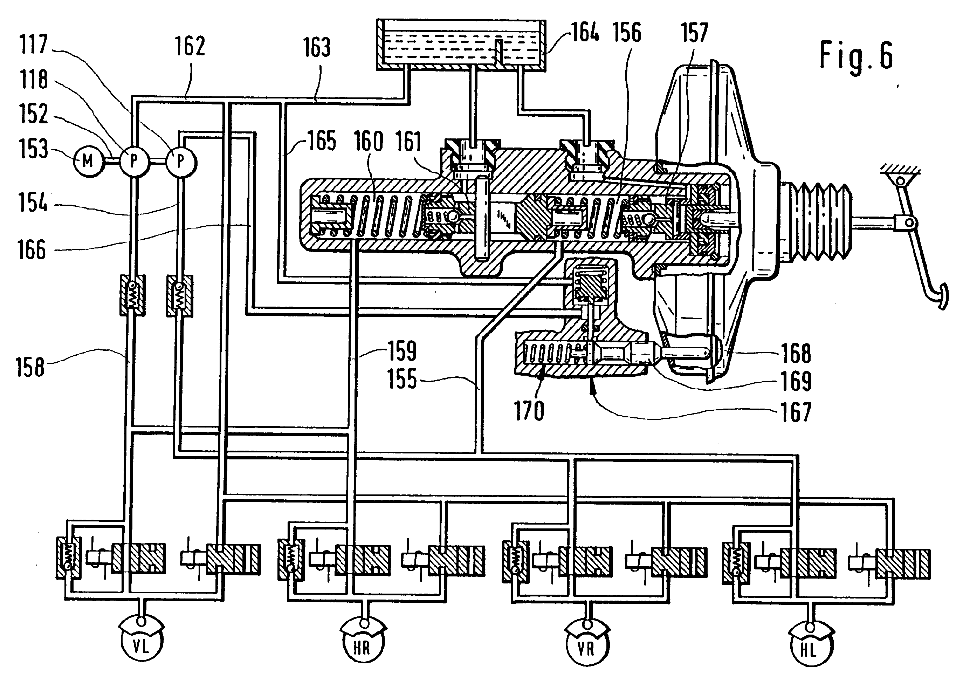

In Figur 6 ist ebenfalls eine Bremsanlage mit einer Bremsdruckregelvorrichtung dargestellt, die auf der Anlage gemäß Figur 1 basiert. Zur einfacheren Darstellung sind in Figur 6 der elektronische Regler, die Radsensoren und die den Radsensoren zugeordneten elektrischen Leitungen fortgelassen worden.

Die Anlage gemäß Figur 6 arbeitet mit zwei Pumpen 117, 118, die über eine gemeinsame Welle 152 vom Motor 153 angetrieben werden. Die Pumpe 117 fördert über die Leitungen 154, 155 Druckmittel in den Arbeitsraum 156 des Druckstangenkolbens 157. Andererseits fördert die Pumpe 117 Druckmittel in den Druckmodulator der Bremsdruckregelvorrichtung, siehe hierzu die Beschreibung der Figur 1.

Die Pumpe 118 fördert über die Leitungen 158, 159 Druckmittel in den Arbeitsraum 160 des schwimmenden Kolbens 161. Außerdem fördert die Pumpe 118, wie im Zusammenhang mit Figur 1 beschrieben, Druckmittel in den Druckmodulator der Bremsdruckregelvorrichtung.

162, 163 sind hydraulische Leitungen. Sie bilden die pumpenansaugseitige Druckmittelzuführung für die Pumpe 118. Der Druckmittelvorratsbehälter ist mit 164 bezeichnet.

Die hydraulischen Leitungen 163, 165, 166 bilden die pumpenansaugseitige Druckmittelzuführung für die Pumpe 117.

In Figur 6 ist eine Vorrichtung zur Sperrung der Saugseite der Pumpe 117 vorgesehen. Diese Vorrichtung ist in ihrer Gesamtheit mit 167 bezeichnet und ist in der pumpenansaugseitigen Druckmittelzuführung angeordnet.

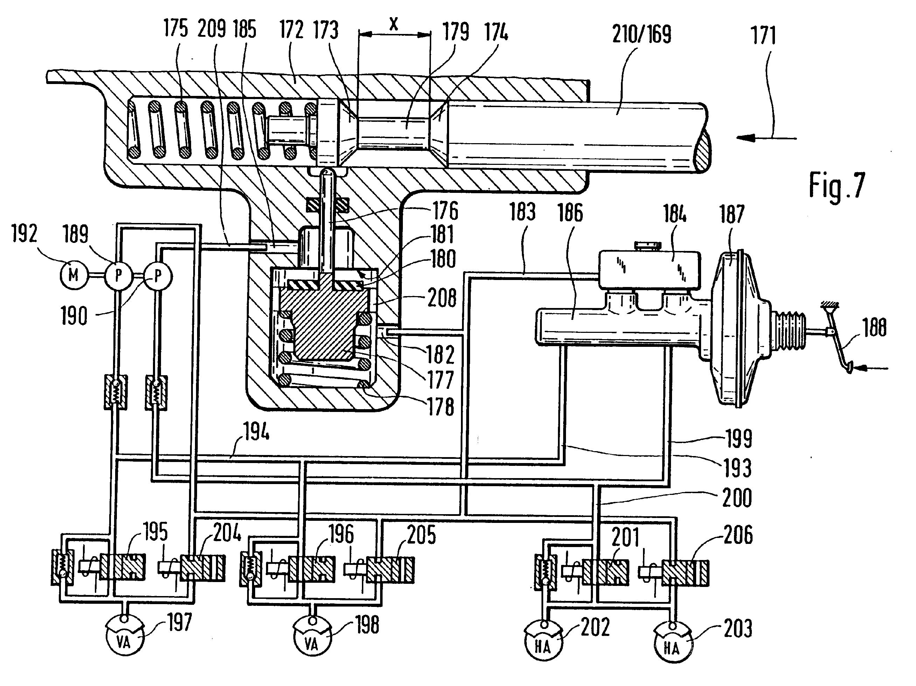

Die Vorrichtung zur Sperrung der Saugseite der Pumpe wird in Figur 7 detailliert dargestellt.

In Figur 6 ist mit 168 der Teil eines Blechkolbens oder eines Membrantellers des Unterdruckbremskraftverstärkers dargestellt. Wie aus Figur 6 ersichtlich, ist der Kolben 169 mit dem Teil 168 des Blechkolbens beziehungsweise des Membrantellers verbunden. Der Blechkolben oder der Membranteller des Unterdruckbremskraftverstärkers bewegt bei Betätigung des Bremskraftverstärkers den Kolben 169 in axiale Richtung nach links oder rechts. Der Kolben 169 wird, wie in Figur 6 dargestellt, in einem Zylinder 170 geführt.

Die Verstellkraft, die vom Blechkolben beziehungsweise Membranteller des Unterdruckbremskraftverstärkers herrührt, ist in Figur 7 mit dem Pfeil 171 dargestellt.

In Figur 7 ist der Kolben 169 in vergrößertem Maßstab dargestellt. Er ist in einem Zylindergehäuse 172, das am Hauptzylinder angegossen ist, geführt.

Der Kolben 169 weist zwei Rampen 173, 174 auf. Der vom Unterdruckbremskraftverstärker herrührenden, auf den Kolben 169 wirkenden Kraft 171 steht die Kraft der Feder 175 entgegen.

Der radial zum Kolben 169 angeordnete Stößel 176 ist durch den Kolben 177 verschiebbar. Der Kolben 177 steht unter dem Druck der Feder 178. Er wird durch die Feder 178 gegen den Kolben 169 beziehungsweise gegen die Rampen 173, 174 beziehungsweise gegen denjenigen Teil 179 des Kolbens 169, der mit geringerem Durchmesser ausgeführt ist, gedrückt, und zwar je nachdem in welcher Position sich der Kolben 169 befindet.

Der Kolben 177 ist mit einem Schließkörper 180, der Tellerform hat, versehen. Dem Schließkörper 180 ist dem Ventilsitz 181 zugeordnet.

Mit 182 ist die Anschlußbohrung für die Leitung 183, beziehungsweise den Druckmittelbehälter 184, bezeichnet. 185 ist die Anschlußbohrung für die Saugseite der Pumpe 190.

Die hydraulische Schaltung nach Figur 7 ist anders ausgestaltet als die hydraulische Schaltungen nach den Figuren 1 und 6.

Nach dem Ausführungsbeispiel gemäß Figur 7 werden die Bremsen für die Hinterachse einerseits und die Bremsen für die Vorderachse andererseits jeweils getrennt mit Druckmittel versorgt. Es handelt sich um eine sogenannte "Schwarz-Weiß-Aufteilung".

Mit 186 ist ein Tandemhauptzylinder und mit 187 der Unterdruckbremskraftverstärker bezeichnet. Das Bremspedal trägt die Bezugsziffer 188.

Im Ausführungsbeispiel gemäß Figur 7 werden die beiden Pumpen 189, 190 durch den Elektromotor 192 angetrieben.

Die Bremsanlage nach Figur 7 arbeitet wie folgt:

Im Normalbremsmodus werden über die Leitungen 193, 194, und die offenen, parallel geschalteten SO-Ventile 195, 196 die Bremsen 197, 198 der Vorderachse mit Druck beaufschlagt. Die Bremsen 202, 203 der hinterachse werden über die Leitungen 199, 200 und das offene SO-Ventil 201 mit Druckmittel beaufschlagt.

Im ABS-Regelmodus, der im Zusammenhang mit Figur 1 genauer beschrieben worden ist, fördert die Pumpe 190 Druckmittel in den Druckraum des Druckstangenkolbens und in die Radzylinder der Bremsen der Hinterachse.

Die Pumpe 189 fördert im Regelmodus Druckmittel in den Druckraum des Schwimmkolbens und in die Radzylinder der Vorderachse.

Wie im Zusammenhang mit Figur 1 beschrieben, wird der Elektromotor im Regelmodus durch den elektronischen Regler in Betrieb gesetzt.

Die SO-Ventile 195, 196, 201 und die SG-Ventile 204, 205, 206 gehören wie im Zusammenhang mit Figur 1 beschrieben, zum Druckmodulator. Sie modulieren entsprechend dem Regelalgorithmus, der im elektronischen Regler gespeichert ist, die Drücke in den Radzylindern.

Bei der hydraulischen Schaltung gemäß Figur 7 werden die Räder der Vorderachse individuell geregelt, während die Räder der Hinterachse eine gemeinsame Regelung aufweisen.

Bei dem Ausführungsbeispiel gemäß Figur 7 besteht die Vorrichtung zur Sperrung der Saugseite der Pumpe 190 im wesentlichen aus dem Kolben 169, dem Stößel 176 und dem Ventil, gebildet aus dem Schließkörper 180 und dem Ventilsitz 181.

Kolben, Stößel und Ventil sind in Figur 7 in Ruhelage dargestellt. Der Anschluß für die Pumpensaugseite ist offen. Das heißt, zwischen dem Behälter 184 und der Ansaugseite der Pumpe 190 besteht eine hydraulische Verbindung durch die Leitung 183, die Bohrung 182, die Kanäle 208 im Kolben 177, das geöffnete Ventil 180, 181, die Bohrung 185, die Leitung 209.

Es wird nun angenommen, daß das Bremspedal betätigt wird und eine Regelung einsetzt. Auf den Kolben 169 äußert sich die Kraft 171. Der Kolben verschiebt sich nach links. Die Rampe 173 gibt das obere Ende des Stößels 176 frei. Die Feder 178 drückt den Schließkörper 180 auf den Ventilsitz 181. Die Saugseite der Pumpe 190 ist gesperrt.

Die Pumpe fördert nicht mehr. Der druckstangenkolbenseitige Arbeitsraum 156, siehe Figur 6, wird sozusagen ausgehungert, das heißt, es wird kein Druckmittel mehr in diesen Raum gefördert.

Da eine Verbindung zwischen Druckstangenkolben und Bremspedal besteht, kann nunmehr das Bremspedal ohne erheblichen Kraftaufwand über eine bestimmte Distanz bewegt werden. Diese Distanz ist abhängig von der Strecke X, siehe Figur 7.

Nach Überwindung der Strecke X wird die zweite Rampe 174 effekiv. Die zweite Rampe überfährt das obere Ende des Stößels 176 und drückt diesen nach unten. Dadurch hebt sich der Schließkörper 180 vom Ventilsitz 181 ab. Die Ansaugseite der Pumpe wird wieder geöffnet. In den zum Druckstangenkolben gehörenden Druckraum wird Druckmittel gefördert.

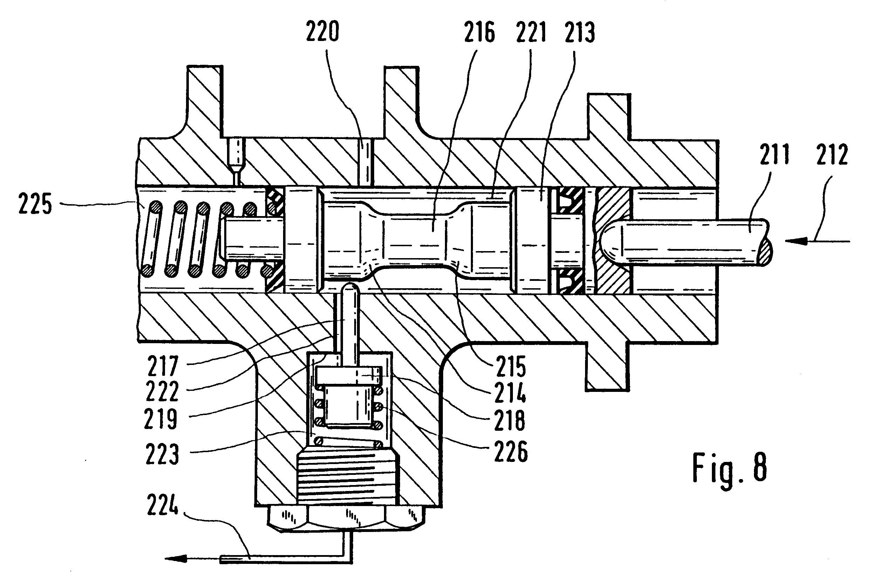

In Figur 8 ist ein weiteres Ausführungsbeispiel dargestellt. Figur 8 zeigt in Schnittdarstellung einen Teil eines Hauptzylinders. Mit 211 ist die Druckstange eines Bremskraftverstärkers bezeichnet, der bei Betrieb des Verstärkers in Richtung des Pfeils 212 den Arbeitskolben 213 nach links bewegt. Der Arbeitskolben weist zwei Rampen 214, 215 auf und einen Teil 216 mit geringerem Durchmesser. Die Rampen bewegen den Stößel 217, der mit dem Ventilkörper 218 verbunden ist. 219 stellt den dazugehörenden Ventilsitz dar.

Wenn sich der Arbeitskolben 213 in Figur 8 nach links bewegt, und zwar aus der in Figur 8 gezeigten Ausgangsposition, gibt die Rampe 214 den Stößel 217 frei. Der Ventilkörper 218 setzt sich durch den Druck der Feder 226 auf den Ventilsitz 219. Hierdurch wird die Druckmittelzufuhr zur Pumpe unterbrochen.

EP 0 358 743 B1

Diese Druckmittelzufuhr wird gebildet aus dem Kanal 220, der in Verbindung steht mit dem Druckmittelbehälter, dem Ringraum 221, dem Kanal 222, dem Raum 223 und der Verbindungsleitung 224 zur Ansaugseite der Pumpe.

Die Pumpe fördert nicht mehr in den Druckraum 225. Der Druckraum 225 vor dem Arbeitskolben 213 wird ausgehungert.

Wenn im Antiblockierregelmodus über den Druckmodulator, siehe Figur 1, Druckmittel aus dem System in den Druckmittelbehälter abläuft, verringert sich, wie oben dargestellt, das Druckmittelvolumen im Raum 225.

Dadurch kann sich der Kolben 213 weiter nach links bewegen. Anschließend kommt die Rampe 215 zur Wirkung. Die Ramme 215 hebt durch den Stößel 217 den Ventilkörper 218 vom Ventilsitz 219 ab, so daß wieder ein freier Durchfluß von Druckmittel vom Behälter zur Ansaugseite der Pumpe möglich ist.

Es kommt wieder zum Druckaufbau im Raum 225. Der Arbeitskolben 213 wird nach rechts bewegt. Das Ventil, bestehend aus Ventilkörper 218 und Ventilsitz 219 geht in ein Schnüffelvorgang über. Im Bereich der Rampe 215 findet ein Regelvorgang statt. Der Kolben 213 und das mit ihm wirkungsmäßig verbundene Bremspedal befinden sich dabei in einer vorgeschobenen Position.

Das soeben beschriebene Ausführungsbeispiel kann sowohl in Verbindung mit dem Druckstangenkolben als auch mit dem Schwimmkolben oder durch beide Kolben ausgeführt werden. Durch das Ausführungsbeispiel nach Figur 8 werden Leitungen und Steuerelemente eingespart.

Liste der Einzelteile

| | |
|---|---|
| 1 | Bremspedal |
| 2 | Modulator |
| 3 | Vorratsbehälter |
| 4 | Rücklaufleitung |
| 5 | elektronischer Regler |
| 6 | Anschlag |
| 7 | Elektromotor |
| 8 | Pumpe |
| 9 | Vakuumbremskraftverstärker |
| 10 | Druckraum |
| 11 | Arbeitskolben |
| 12 | Arbeitskolben |
| 13 | Nachlaufraum |
| 14 | Nachlaufbohrung |
| 15 | Druckraum |
| 16 | Tandemhauptzylinder |
| 17 | Leitung |
| 18 | Leitung |
| 19 | hydraulische Leitung |
| 20 | hydraulische Leitung |
| 21 | Druckkreis |
| 22 | Druckkreis |
| 23 | SO-Ventil |
| 24 | SO-Ventil |
| 25 | SO-Ventil |
| 26 | SO-Ventil |
| 27 | Radbremse |
| 28 | Radbremse |
| 29 | Radbremse |
| 30 | Radbremse |
| 31 | SG-Ventil |
| 32 | SG-Ventil |
| 33 | SG-Ventil |
| 34 | SG-Ventil |
| 35 | Rückflußleitung |
| 36 | Sensor |
| 37 | Sensor |
| 38 | Sensor |

7

| | |
|---|---|
| 39 | Sensor |
| 40 | Eingang |
| 41 | Eingang |
| 42 | Eingang |
| 43 | Eingang |
| 44 | Ausgang |
| 45 | Ausgang |
| 46 | Ausgang |
| 47 | Ausgang |
| 48 | Ausgang |
| 49 | Druckleitung |
| 50 | Druckleitung |
| 51 | Druckleitung |
| 52 | Leitung |
| 53 | Leitung |
| 54 | Welle |
| 55 | Exzenter |
| 56 | Kolben |
| 57 | Kolben |
| 58 | Hülse |
| 59 | Rückschlagventil |
| 60 | Raum |
| 61 | Rückschlagventil |
| 62 | Betätigungseinheit |
| 63 | Stößel |
| 64 | Kugel |
| 65 | Ventilsitz |
| 66 | elektromagnetische Betätigungseinheit |
| 67 | Stößel |
| 68 | Körper |
| 69 | Körper |
| 70 | Ventilsitz |
| 71 | Ansaugkanal |
| 72 | Stange |
| 73 | elektromagnetische Betätigungseinheit |
| 74 | Körper |
| 75 | elektromagnetische Betätigungseinheit |
| 76 | Leitung |
| 77 | Überdruckventil |
| 78 | Leitung |
| 79 | Schieberelement |
| 80 | elektromagnetische Betätigungseinheit |
| 81 | Absatz |
| 82 | Ende des Schieberelements |
| 117 | Pumpe |
| 118 | Pumpe |
| 152 | Welle |
| 153 | Motor |
| 154 | Leitung |
| 155 | Leitung |
| 156 | Raum |
| 157 | Kolben |
| 158 | Leitung |
| 159 | Leitung |
| 160 | Raum |
| 161 | Kolben |
| 162 | Leitung |
| 163 | Leitung |

| | |
|---|---|
| 164 | Behälter |
| 165 | Leitung |
| 166 | Leitung |
| 167 | Vorrichtung |
| 168 | Teil |
| 169 | Kolben |
| 170 | Zylinder |
| 171 | Kraft |
| 172 | Gehäuse |
| 173 | Rampe |
| 174 | Rampe |
| 175 | Feder |
| 176 | Stößel |
| 177 | Kolben |
| 178 | Feder |
| 179 | Teil |
| 180 | Körper |
| 181 | Ventilsitz |
| 182 | Bohrung |
| 183 | Leitung |
| 184 | Behälter |
| 185 | Anschluß |
| 186 | Tandemhauptzylinder |
| 187 | Verstärker |
| 188 | Pedal |
| 189 | Pumpe |
| 190 | Pumpe |
| 191 | Ringraum |
| 192 | Motor |
| 193 | Leitung |
| 194 | Leitung |
| 195 | SO-Ventil |
| 196 | SO-Ventil |
| 197 | Bremse |
| 198 | Bremse |
| 199 | Leitung |
| 200 | Leitung |
| 201 | SO-Ventil |
| 202 | Bremse |
| 203 | Bremse |
| 204 | SG-Ventil |
| 205 | SG-Ventil |
| 206 | SG-Ventil |
| 208 | Kanal |
| 209 | Leitung |
| 210 | Kolbenelement |
| 211 | Druckstange |
| 212 | Pfeil |
| 213 | Kolben |
| 214 | Rampe |
| 215 | Rampe |
| 216 | Teil |
| 217 | Stößel |
| 218 | Ventilkörper |
| 219 | Ventilsitz |
| 220 | Kanal |
| 221 | Ringraum |
| 222 | Kanal |

223   Raum
224   Leitung
225   Raum
226   Feder
X     Distanz


**Patentansprüche**

1. Bremsanlage, insbesondere für Kraftfahrzeuge, mit einem Hauptzylinder, Radzylindern und einer Vorrichtung zur Antiblockierregelung, wobei im Regelmodus zur Positionierung mindestens eines Kolbens des Hauptzylinders in einer gewünschten Position eine Pumpe vorgesehen ist, deren Fördervolumen variierbar ist, die durch eine hydraulische Leitung (Druckleitung) mit dem Hauptzylinder verbunden ist, und die durch ihr Fördervolumen den Kolben positioniert, die Teil eines Pumpenaggregats ist, das mindestens eine Einlaßleitung, die eine Verbindung mit dem Vorratsbehälter herstellt, umfaßt, mit einem elektronischen Regler für die Antiblockierregelung dadurch **gekennzeichnet**, daß dem Pumpenaggregat Mittel zugeordnet sind, welche den Kolbenrückhub oder den Einlaß oder den Auslaß blockieren und damit die Förderung der Pumpe unterbrechen.

2. Bremsanlage nach Anspruch 1, dadurch **gekennzeichnet**, daß die Mittel durch ein oder mehrere Ausgangssignale des elektronischen Reglers aktivierbar sind.

3. Bremsanlage nach Anspruch 2, dadurch **gekennzeichnet**, daß die Mittel elektromagnetisch betätigbar sind.

4. Bremsanlage nach Anspruch 2, dadurch **gekennzeichnet**, daß die Mittel hydraulisch betätigbar sind.

5. Bremsanlage nach Anspruch 2, dadurch **gekennzeichnet**, daß die Mittel mechanisch betätigbar sind.

6. Bremsanlage nach Anspruch 2, dadurch **gekennzeichnet**, daß die Mittel pneumatisch, vorzugsweise durch Unterdruck betätigbar sind.

7. Bremsanlage nach einem oder mehreren der vorangegangenen Ansprüche mit einem, insbesondere als Rückschlagventil ausgebildeten, Saug- oder Einlaßventil in der Einlaßleitung des Pumpenaggregats, dadurch **gekennzeichnet**, daß eine Stößelvorrichtung (63) vorgesehen ist, die den Schließkörper (64) des Rückschlagventils vom Ventilsitz (65) abhebt.

8. Bremsanlage nach einem oder mehreren der vorangegangenen Ansprüche mit einem Rückschlagventil in der Einlaßleitung des Pumpenaggregats, dadurch **gekennzeichnet**, daß eine Stößelvorrichtung (67) vorgesehen ist, die den Schließkörper (64) des, insbesondere als Rückschlagventil ausgebildeten, Saug- oder Einlaßventils in Offenposition verklemmt, so daß eine Passage des Druckmittels möglich ist.

9. Bremsanlage nach einem oder mehreren der vorangegangenen Ansprüche, dadurch **gekennzeichnet**, daß in der Einlaßleitung (17) eine Sperrvorrichtung, vorzugsweise bestehend aus einem Schließkörper (69) und einem Ventilsitz (70), vorgesehen ist.

10. Bremsanlage nach einem oder mehreren der vorangegangenen Ansprüche, dadurch **gekennzeichnet**, daß in der Druckleitung eine Sperrvorrichtung, vorzugsweise einen verschiebbaren Sperrkörper (74) umfassend, vorgesehen ist, der die Druckleitung (53) zum Hauptzylinder sperrt, daß strömungsmäßig oberhalb der Sperrvorrichtung die Druckleitung über eine hydraulische Rückführleitung (76,78) mit der Einlaßleitung verbunden ist, daß in der Rückführleitung ein Überdruckventil (77) angeordnet ist.

11. Bremsanlage nach einem oder mehreren der vorangegangenen Ansprüche mit einer Pumpe, die einen Hubkolben aufweist, dadurch **gekennzeichnet**, daß eine Hubbegrenzungsvorrichtung vorgesehen ist, die aus einem Schieberelement (79) besteht, das die Bewegungen des Hubkolbens blockiert.

12. Bremsanlage nach einem oder mehreren der vorangegangenen Ansprüche, insbesondere nach Anspruch 11, dadurch **gekennzeichnet**, daß der Hubkolben (56) bei Betatigung des Schieberelements (79), insbesondere durch einen Absatz (81) am Schieberelement anschlägt.

13. Bremsanlage nach Anspruch 1, dadurch **gekennzeichnet**, daß eine Vorrichtung zur Sperrung der Saugseite der Pumpe vorgesehen ist, daß die Vorrichtung so ausgebildet ist, daß sie die Sperrung der Saugseite dann aufhebt, wenn der Arbeitskolben des Hauptzylinders eine bestimmte Strecke in den Hauptzylinder hinein zurückgelegt hat.

14. Bremsanlage nach Anspruch 13, dadurch **gekennzeichnet**, daß die Vorrichtung zur Sperrung der Saugseite der Pumpe aus einem Ventil besteht, das über eine Rampen-Stößel-Anordnung betätigbar ist.

15. Bremsanlage nach den Ansprüchen 13 und 14, dadurch **gekennzeichnet**, daß die Vorrichtung zur Sperrung der Saugseite der Pumpe (190) ein Kolbenelement (210), das mit Rampen (173,174) versehen ist, ein Stößelelement (176), einen Ventilsitz (181), einen unter dem Druck einer Feder (178) stehenden Schließkörper (180) umfaßt, daß bei Bewegung des Kolbenelements (169) die Rampen (173, 174) des Kolbenelements (169) das Stößelelement (176) bewegen und daß das Stößelelement (176) den Schließkörper (180) vom Ventilsitz (181) abhebt.

16. Bremsanlage nach einem,oder mehreren der Ansprüche 13-15, dadurch **gekennzeichnet**, daß die Vorrichtung zur Sperrung der Saugseite der Pumpe als integrales Teil des Hauptzylinders ausgebildet ist.

17. Bremsanlage nach einem öder mehreren der Ansprüche 13-16, dadurch **gekennzeichnet**, daß ein Gehäuse für die Vorrichtung zur Sperrung der Saugseite der Pumpe vorgesehen ist, das am Hauptzylinder angebracht, vorzugsweise angegossen, ist.

18. Bremsanlage nach einem oder mehreren der Ansprüche 13-17, dadurch **gekennzeichnet**, daß die Vorrichtung zur Sperrung der Saugseite der Pumpe mindestens einen mit Schaltrampen (214, 215) versehenen Arbeitskolben (213) (Druckstangenkolben und/oder Schwimmkolben) des Hauptzylinders, ein Stößelelement (217), einen Ventilsitz (219), einen Schließkörper (218) umfaßt, daß bei Bewegung des Arbeitskolbens (213) die Rampen (214, 215) des Arbeitskolbens (213) das Stößelement (217) bewegen und daß das Stößelelement (217) den Schließkörper (218) vom Ventilsitz (219) abhebt.

## Claims

1. A brake system, more particularly for automotive vehicles, comprising a master cylinder, wheel cylinders as well as a device for anti-lock control, wherein in the control mode for the positioning of at least one piston of the master cylinder in a desired position, a pump is provided whose volume of delivery is variable, which communicates via a hydraulic line (pressure line) with the master cylinder and which positions the piston by the volume of fluid it delivers, the said pump being part of a pump unit having at least one inlet line that constitutes a connection to the supply reservoir, and comprising an electronic control unit for the anti-lock control, **characterized** in that the pump unit comprises means which block the piston return stroke or the inlet or the outlet and which thereby interrupt the fluid delivery of the pump.

2. A brake system as claimed in claim 1, **characterized** in that the said means are adapted to be activated by one or more of the output signals of the electronic control unit.

3. A brake system as claimed in claim 2, **characterized** in that the said means can be activated electromagnetically.

4. A brake system as claimed in claim 2, **characterized** in that the said means can be activated hydraulically.

5. A brake system as claimed in claim 2, **characterized** in that the said means can be activated mechanically.

6. A brake system as claimed in claim 2, **characterized** in that the said means can be activated pneumatically, preferably by vacuum.

7. A brake system as claimed in any one or more of the preceding claims having a suction or inlet valve in the inlet line of the pump unit which is designed especially as a non-return valve, **characterized** in that a tappet device (63) is provided which lifts the closure member (64) of the non-return valve from the valve seat (65).

8. A brake system as claimed in any one or more of the preceding claims having a non-return valve in the inlet line of the pump unit, **characterized** in that a tappet device (67) is provided which jams the closure member (64) of the suction or inlet valve, which is designed especially as a non-return valve, in its opened position and thereby permits passage of the pressure fluid.

9. A brake system as claimed in any one or more of the preceding claims, **characterized** in that the inlet line (17) contains a shut-off mechanism, preferably consisting of a closure member (69) and a valve seat (70).

10. A brake system as claimed in any one or more of the preceding claims, **characterized** in that the pressure line is provided with a shut-off mechanism comprising preferably a displaceable blocking element (74) which shuts off the pressure line (53) to the master cylinder so that, upstream of the shut-off mechanism, the pressure line connects via a hydraulic return line (76, 78) with the inlet line, and in that a pressure-relief valve (77) is arranged in the return line.

11. A brake system as claimed in any one or more of the preceding claims comprising a pump with a lifting piston, **characterized** in that there is provision of a stroke-limiting device which consists of a slide element (79) blocking the movements of the lifting piston.

12. A brake system as claimed in any one or more of the preceding claims, in particular as claimed in claim 11, **characterized** in that the lifting piston (56) will abut on the slide element, in particular by a step (81), when the slide element (79) is actuated.

13. A brake system as claimed in claim 1, **characterized** in that there is provision of a device for blocking the suction side of the pump, in that this device is designed such as to remove blocking of the suction side when the working piston of the master cylinder has covered a predetermined distance into the master cylinder.

14. A brake system as claimed in claim 13, **characterized** in that the device for blocking the suction side of the pump consists of a valve which is actuatable via a ramp-and-tappet arrangement.

15. A brake system as claimed in claims 13 and 14, **characterized** in that the device for blocking the suction side of the pump (190) comprises a piston element (210) provided with ramps (173, 174), a tappet element (176), a valve seat (181), a closure member (180) subjected to the pressure of a spring (178), in that, upon movement of the piston element (169), the ramps (173, 174) of the piston element (169) will move the tappet element (176), and in that the tappet element (176) lifts the closure member (180) from the valve seat (181).

16. A brake system as claimed in any one or more of the claims 13 to 15, **characterized** in that the device for blocking the suction side of the pump is designed as an integral part of the master cylinder.

17. A brake system as claimed in any one or more of the claims 13 to 16, **characterized** in that the device for blocking the suction side of the pump is accommodated in a housing that is mounted on the master cylinder, namely preferably cast thereon.

18. A brake system as claimed in any one or more of the claims 13 to 17, **characterized** in that the device for blocking the suction side of the pump comprises at least one working piston (213) (push rod piston and/or floating piston) of the master cylinder, a tappet element (217), a valve seat (219), a closure member (218), the said working piston being provided with switching ramps (214, 215), in that upon movement of the working piston (213) the ramps (214, 215) of the working piston (213) will move the tappet element (217), and in that the tappet element (217) lifts the closure member (218) from the valve seat (219).


## Revendications

1. Système de freinage, notamment pour véhicule automobile, comprenant un maître-cylindre, des cylindres de roues et un dispositif de régulation antiblocage, système dans lequel, en mode de régulation et en vue du positionnement d'au moins un piston du maître-cylindre dans une position voulue, il est prévu une pompe dont on peut faire varier la capacité de refoulement, qui est reliée au maître-cylindre par un conduit hydraulique (conduit de pression), qui positionne le piston en fonction de sa capacité de refoulement et qui fait partie d'un ensemble de pompe comprenant au moins un conduit d'entrée qui réalise une liaison avec le réservoir de stockage, le système comprenant en outre un régulateur électronique destiné à la régulation antiblocage, **caractérisé** en ce qu'il est associé à l'ensemble de pompe des moyens qui bloquent la course de retour de piston ou l'entrée ou la sortie et interrompent donc le refoulement de la pompe.

2. Système de freinage suivant la revendication 1, **caractérisé** en ce que les moyens sont agencés de façon à pouvoir être actionnés par un ou plusieurs signaux de sortie du régulateur électronique.

3. Système de freinage suivant la revendication 2, **caractérisé** en ce que les moyens sont agencés de façon à pouvoir être actionnés par voie électromagnétique.

4. Système de freinage suivant la revendication 2, **caractérisé** en ce que les moyens sont agencés de façon à pouvoir être actionnés par voie hydraulique.

5. Système de freinage suivant la revendication 2, **caractérisé** en ce que les moyens sont agencés de façon à pouvoir être actionnés par voie mécanique.

6. Système de freinage suivant la revendication 2, **caractérisé** en ce que les moyens sont agencés de façon à pouvoir être actionnés par voie pneumatique, de préférence sous l'effet d'une dépression.

7. Système de freinage suivant une ou plusieurs des revendications précédentes, comportant une valve d'aspiration ou d'entrée, réalisée notamment sous la forme d'une valve antiretour, qui est disposée dans le conduit d'entrée de l'ensemble de pompe, **caractérisé** en ce qu'il est prévu un dispositif à poussoir (63) qui soulève du siège de valve (65) le corps de fermeture (64) de la valve antiretour.

8. Système de freinage suivant une ou plusieurs des revendications précédentes, comprenant une valve antiretour disposée dans le conduit d'entrée de l'ensemble de pompe, **caractérisé** en ce qu'il est prévu un dispositif à poussoir (67) qui bloque en position ouverte le corps de fermeture (64) de la valve d'aspiration ou d'entrée, réalisée notamment sous la forme d'une valve antiretour, de façon telle qu'un passage de l'agent de pression soit possible.

9. Système de freinage suivant une ou plusieurs des revendications précédentes, **caractérisé** en ce que, dans le conduit d'entrée (17), il est prévu un dispositif d'arrêt, constitué de préférence d'un corps de fermeture (69) et d'un siège de valve (70).

10. Système de freinage suivant une ou plusieurs des revendications précédentes, **caractérisé** en ce que, dans le conduit de pression, il est prévu un dispositif d'arrêt qui comprend de préférence un corps d'arrêt (74) agencé de façon à pouvoir être déplacé en translation et qui bloque le conduit de pression (53) menant au maître-cylindre, en ce qu'en amont du dispositif d'arrêt suivant la direction d'écoulement, le conduit de pression est relié au conduit d'entrée par un conduit de retour hydraulique (76, 78) et en ce qu'une valve de surpression (77) est disposée dans ce conduit de retour.

11. Système de freinage suivant une ou plusieurs des revendications précédentes, comprenant une pompe qui comporte un piston alternatif, **caractérisé** en ce qu'il est prévu un dispositif de limitation de course qui est constitué d'un élément coulissant (79) qui bloque les mouvements du piston alternatif.

12. Système de freinage suivant une ou plusieurs des revendications précédentes, notamment suivant la revendication 11, **caractérisé** en ce que, lors d'un actionnement de l'élément coulissant (79), le piston alternatif (56) vient en butée, notamment par un épaulement (81), sur cet élément coulissant.

13. Système de freinage suivant la revendication 1, **caractérisé** en ce qu'il est prévu un dispositif de blocage du côté d'aspiration de la pompe et en ce que ce dispositif est agencé de façon à supprimer le blocage du côté d'aspiration lorsque le piston de travail du maître-cylindre a parcouru une course déterminée dans le maître-cylindre.

14. Système de freinage suivant la revendication 13, **caractérisé** en ce que le dispositif de blocage du côté d'aspiration de la pompe est constitué d'une valve qui est agencée de façon à pouvoir être actionnée au moyen d'un agencement à rampe et poussoir.

15. Système de freinage suivant les revendications 13 et 14, **caractérisé** en ce que le dispositif de blocage du côté d'aspiration de la pompe (190) comprend un élément de piston (210), pourvu de rampes (173, 174), un élément-poussoir (176), un siège de valve (181) et un corps de fermeture (180) soumis à l'effort d'un ressort (178), en ce que, lors d'un déplacement de l'élément de piston (169), les rampes (173, 174) de cet élément de piston (169) déplacent l'élément-poussoir (176) et en ce que cet élément-poussoir (176) soulève le corps de fermeture (180) du siège de valve (181).

16. Système de freinage suivant une ou plusieurs des revendications 13 à 15, **caractérisé** en ce que le dispositif de blocage du côté d'aspiration de la pompe est réalisé comme faisant partie intégrante du maître-cylindre.

17. Système de freinage suivant une ou plusieurs des revendications 13 à 16, **caractérisé** en ce qu'il est prévu, pour le dispositif de blocage du côté d'aspiration de la pompe, un boîtier qui est solidaire du maître-cylindre, de préférence en étant réalisé venu de moulage avec ce dernier.

18. Système de freinage suivant une ou plusieurs des revendications 13 à 17, **caractérisé** en ce que le dispositif de blocage du côté d'aspiration de la pompe comprend au moins un piston de travail (213) (piston à tige de pression et/ou piston flottant) du maître-cylindre, ce piston étant pourvu de rampes de commutation (214, 215), un élément-poussoir (217), un siège de valve (219) et un corps de fermeture (218), en ce que, lors d'un déplacement du piston de travail (213), les rampes (214, 215) de ce piston de travail (213) déplacent l'élément-poussoir (217) et en ce que cet élément-poussoir (217) soulève le corps de fermeture (218) du siège de valve (219).

Fig.1

EP 0 358 743 B1

Fig. 2

Fig. 3

Fig.4

EP 0 358 743 B1

Fig. 5

EP 0 358 743 B1

Fig. 6

EP 0 358 743 B1

Fig.7

Fig. 8

EP 0 358 743 B1